# EUROPEAN PATENT SPECIFICATION

(11) **EP 3 170 784 B1**
(45) Date of publication and mention of the grant of the patent: **27.02.2019**
(21) Application number: 15195337.9
(22) Date of filing: 19.11.2015
(51) Int. Cl.: B66D 1/50, B63B 21/22, B63B 21/16

(54) **METHOD FOR OPERATING ANCHOR WINCH, AND ANCHOR WINCH**
VERFAHREN ZUM BETRIEB EINER ANKERWINDE UND ANKERWINDE
PROCÉDÉ POUR FAIRE FONCTIONNER UN GUINDEAU ET GUINDEAU

(43) Date of publication of application: 24.05.2017
(73) Proprietor: ABB Schweiz AG, 5400 Baden (CH)
(72) Inventor: Holmberg, Mikael, 00380 Helsinki (FI); Jung, Vassili, 00380 Helsinki (FI)
(74) Representative: Kolster Oy Ab

(56) References cited:
- EP-A1- 2 921 448
- WO-A1-2013/136381
- GB-A- 2 017 877

## Description

### FIELD OF THE INVENTION

The invention relates to a method for operating an anchor winch, and to an anchor winch.

### BACKGROUND OF THE INVENTION

An anchor winch may be used for lowering and raising an anchor of a vessel to/from a bottom of a body of water. Such a vessel may be a ship, a boat or generally a craft designed for water transportation, for example. Examples of the body of water include a sea, an ocean, a lake, a river, a channel, a canal, or any parts thereof.

An anchor winch may comprise a winch drum which is rotatable about an axis of rotation thereof and may be used for spooling a spoolable medium, which has an anchor connected to an end thereof, to raise or lower the anchor. The spoolable medium may comprise a cable, a rope, a wire or a chain, for example. An anchor winch may further comprise an electric motor which is configured to rotate the winch drum about an axis of rotation thereof during spooling in or spooling out of the spoolable medium. Thus, the spooling in or spooling out of the spoolable medium and thus the lowering or raising of the anchor may be controlled by suitably driving the electric motor which drives the winch drum. Document EP 2921448 discloses an example of a winch, such as an anchor winch, comprising a winch drum for spooling a spoolable medium and an electric motor which is configured to rotate the winch drum during the spooling in or spooling out of the spoolable medium.

When the anchor of a vessel is raised, or heaved up, possibly with full speed of the electric motor from the bottom of the body of water to above the water surface of the body of water, there is a moment when the anchor comes out of the body of water, i.e. rises above the water surface. During this moment, or soon after that, it may be desirable to at least slow down the anchor speed, or even stop the anchor, when the anchor is approaching the vessel in order to enable the anchor to reach the vessel in a controlled manner. The final approach and stopping of the anchor upon reaching the vessel may be performed manually or automatically after the slowing down or stopping of the anchor. Thus, in order to be able to perform the slowing down or stopping of the anchor when or after the anchor comes out of the body of water, the moment when the anchor comes out of the body of water should somehow be detected.

One possible solution is to use sensors in connection with the winch drum to continuously determine the amount of the spoolable medium that is spooled out and in that way to determine the moment when the anchor comes out of the body of water and approaches the vessel.

A problem related to the use of such sensors is that in marine applications or similar environments, for example, harsh ambient conditions may pose a problem to a reliable operation of the sensors.

### BRIEF DESCRIPTION OF THE INVENTION

The object of the invention is thus to provide a method and an apparatus for implementing the method so as to solve or at least alleviate the above problem. The object of the invention is achieved with a method, and a winch that are characterized by what is stated in the independent claims. Preferred embodiments of the invention are described in the dependent claims.

The invention is based on the idea of monitoring a torque of an electric motor driving an anchor winch during the raising of the anchor and determining that the anchor has risen above the water surface on the basis of changes in the torque detected during the monitoring.

An advantage of the invention is that it enables the detection of the proximity of one of the two end positions without the use of any additional external components, such as proximity switches or sensors. This improves the reliability of the operation of the winch.

### BRIEF DESCRIPTION OF THE FIGURES

In the following, the invention will be described in more detail in connection with preferred embodiments with reference to the accompanying drawings, in which
Figure 1 illustrates a diagram of a winch according to an embodiment; and
Figure 2 illustrates a diagram of a motor torque curve according to an embodiment.

### DETAILED DESCRIPTION OF THE INVENTION

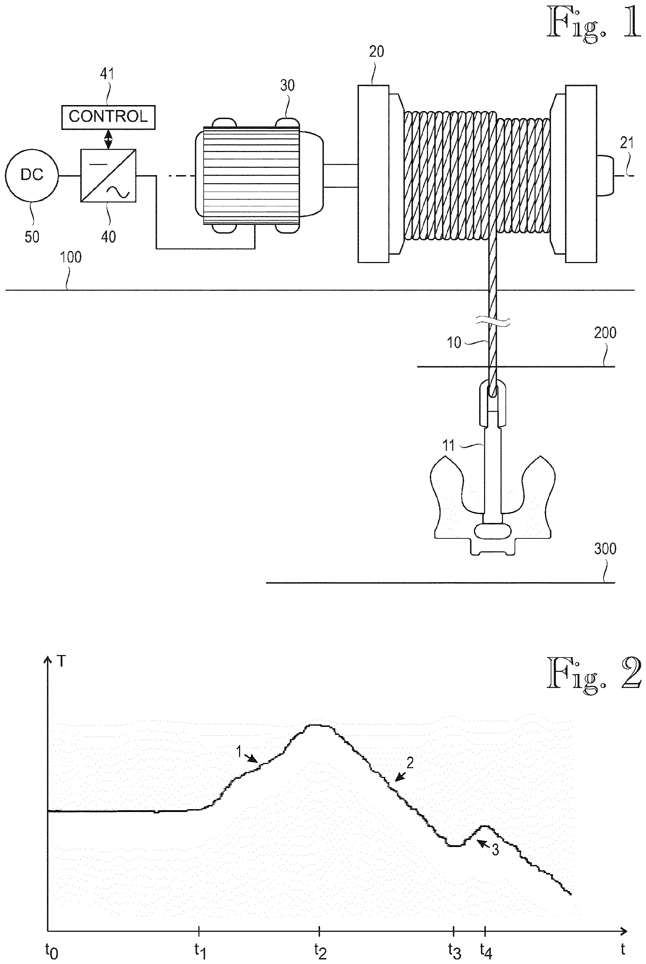

Figure 1 illustrates a simplified diagram of an anchor winch of a vessel 100 according to an embodiment. The figure only shows components necessary for understanding the various embodiments. The vessel 100 may be a ship, a boat, a raft, or generally a craft designed for water transportation, for example. The exemplary winch comprises a winch drum 20 for spooling a spoolable medium 10, which winch drum is rotatable about an axis of rotation 21. The spoolable medium 10 may comprise a cable, a rope, a wire or a chain, or any combination thereof, for example. The spoolable medium 10 has an anchor 11 connected to an end thereof. The term anchor generally refers to a device which can be used to connect a vessel to a bottom 300, i.e. a bed, of a body of water such as a sea, an ocean, a lake, a river, a channel, a canal or the like. By spooling the spoolable medium 10 by the winch drum 20 the anchor 11 can be raised or lowered depending on the direction of spooling. In the example of Figure 1, the winch further comprises a winch drive, in this example an electric drive comprising an electric motor 30, with which the winch drum 20 can be rotated. Thus, the electric motor 30 is configured to rotate the winch drum 20 about the axis of rotation 21 thereof during spooling in or spooling out of the spoolable medium 10. The electric motor 30 driving the winch drum 20 can be of any type, such as an asynchronous AC motor, such as an induction motor, a synchronous AC motor or a DC motor. It should be noted that the embodiments described herein are not limited to systems employing any specific fundamental frequency or any specific voltage level, for example. In the example of Figure 1, the electric motor 30 is an induction motor and the electric drive further comprises an inverter 40 for feeding the electric motor 30 from a DC power supply 50. An inverter is a device used, for instance, for controlling a motor. The control of the electric motor 30 may be implemented reliably by means of the inverter 40 in such a manner that the motor 30 accurately implements a desired speed or torque instruction, for example. The electric drive could alternatively comprise a frequency converter fed from an AC power supply for controlling the electric motor 30, for example. The exemplary embodiment further comprises a separate control unit 41 of the electric drive, which may be used to control the inverter 40 and, thus, the electric motor 30 and to operate the winch. The control unit 41 may also be a part of the inverter 40 or some other unit, for example. The control unit 41 may comprise suitable I/O (Input-Output) means, such as a keyboard and display unit or another separate terminal unit, which may be connected to the control unit 41 in a wired or wireless manner. Thus, an operator or user of the system can operate the winch through such I/O means.

According to an embodiment, when the anchor 11 of the vessel 100 is to be raised from the bottom 300 of the body of water to above the water surface 200 of the body of water, the winch can be operated as follows. The anchor 11 is raised from the bottom 300 of the body of water to above the water surface 200 of said body of water by driving the winch drum 20 to spool in the spoolable medium 10 by the electric motor 30, and during said raising of the anchor 11 a torque produced by the electric motor 30, or a quantity indicative thereof, is monitored. Such a quantity indicative of the torque produced by the electric motor 30 may be a current or an electric power supplied to the electric motor 30, for example. The monitoring of the torque produced by the electric motor 30, or the quantity indicative thereof, can be performed by the control unit 41 of the electric drive and/or the inverter 40, or some other possible separate device or system, for example. The monitoring of the torque produced by the electric motor 30, or the quantity indicative thereof, may include suitable filtering in order to filter out possible fluctuation in the torque. Firstly, during the raising of the anchor from the bottom 300 of the body of water to above the water surface 200 of said body of water, a first increase in the torque produced by the electric motor 30 is detected, which first increase has a value higher than a first predetermined torque threshold. Secondly, during the raising of the anchor from the bottom 300 of the body of water to above the water surface 200 of said body of water and after the first increase is detected, a decrease in the torque produced by the electric motor 30 is detected, which decrease lasts for at least a predetermined time threshold and during which decrease a rate of decrease of the torque produced by the electric motor is within a predetermined range. Thirdly, during the raising of the anchor from the bottom 300 of the body of water to above the water surface 200 of said body of water and after the decrease is detected, a second increase in the torque produced by the electric motor 30 is detected, which second increase has a value higher than a second predetermined torque threshold. Finally, in response to detecting the second increase, it can be determined that the anchor 11 has risen above the water surface 200 of said body of water. Thus, the raising of the anchor 11 above the water surface 200 of said body of water can be determined on the basis of monitoring the torque of the electric motor 30 driving the anchor winch during the raising of the anchor 11.

According to an embodiment, the raising of the anchor 11 can be stopped or the speed at which the anchor 11 is being raised can be lowered and the raising of the anchor can be continued at the lowered speed in response to the determining that the anchor has risen above the water surface 200 of said body of water. For example, the speed at which the anchor 11 is being raised may initially be the maximum or near maximum speed provided by the anchor winch, and after it has been determined that the anchor has risen above the water surface 200 of said body of water, this speed may be lowered to a fraction of the initial speed, or the raising of the anchor 11 can be completely stopped. In this way, the raising of the anchor into the vessel 100, or into a vicinity thereof, can be performed in a controlled manner and can be performed automatically by the winch without a manual control of the winch. According to an embodiment, the lowering of the speed at which the anchor 11 is being raised or the stopping of the raising of the anchor can be performed essentially immediately after determining that the anchor has risen above the water surface 200 of said body of water. Alternatively, according to an embodiment, the lowering of the speed at which the anchor 11 is being raised or the stopping of the raising of the anchor can be performed after a predetermined delay after determining that the anchor has risen above the water surface 200 of said body of water. The predetermined delay may be determined on the basis of how high above the water surface 200 of said body of water the anchor 11 is to be lifted before either the stopping of the raising of the anchor 11 or the lowering of the speed at which the anchor is being raised is performed, for example. This may depend on the height of the vessel 100 in question, for example.

Figure 2 illustrates an exemplary diagram of a motor torque curve according to an embodiment. It should be noted that the torque curve shown in Figure 2 is a mere example and that the actual torque curve depends on the characteristics of the system in question, such as the weight of the spoolable medium 10, the weight of the anchor 11, the depth of the water, the salinity of the water, etc. The vertical axis of the diagram of Figure 2 illustrates the torque T produced by the electric motor 30 and the horizontal axis illustrates time t during the raising of the anchor 11 from the bottom 300 of the body of water to above the water surface 200 of said body of water. If the speed at which the anchor 11 is raised remains essentially constant, then the horizontal axis also inversely corresponds to the length of the spoolable medium that has been spooled out of the winch drum 20, i.e. the length of the spoolable medium between the winch drum 20 and the anchor 11, such that the length becomes shorter when moving to the right along the axis. The raising of the anchor 11 from the bottom 300 of the body of water to above the water surface 200 of said body of water is started at time t₀ by driving the winch drum 20 to spool in the spoolable medium 10 by the electric motor 30. In the example of Figure 2 the spoolable medium between the winch drum 20 and the anchor 11 lying on the bottom 300 of the body of water is loose at the beginning, and hence the torque T produced by the electric motor 30 remains essentially constant until time t₁, as before that only the loose spoolable medium 10 is being spooled in. At time t₁ the torque T produced by the electric motor 30 starts to increase because the anchor 11 is being lifted from the bottom 300 of the body of water. At time t₂ the increasing of the torque T produced by the electric motor 30 stops corresponding to the moment when the anchor is completely lifted from the bottom 300 of the body of water. This increase 1 between the time points t₁ and t₂ is the first increase in the torque produced by the electric motor 30 to be detected. Thus, the value of the first predetermined torque threshold can be based on the increase in the torque T caused by the anchor 11 being lifted from the bottom 300 of the body of water, i.e. the difference of the torque t between time points t₁ and t₂. When determining the value of the first predetermined torque threshold, a possible error margin can be taken into account. Such an error can be caused by inaccuracy of measurement and possible movement of the vessel 100 due to wind or waves, for example. After time point t₂ the torque T produced by the electric motor 30 starts to decrease because the length of the spoolable medium 10, and hence the weight thereof, becomes smaller as it is being spooled in while the anchor 11 is hanging in the water between the bottom 300 of the body of water and the surface 200 of the body of water. At time t₃ the decreasing of the torque T produced by the electric motor 30 stops corresponding to the moment when the anchor 11 reaches the surface 200 of the body of water. This decrease 2 between the time points t₂ and t₃ is the decrease in the torque produced by the electric motor 30 to be detected after detecting the first increase 1. The predetermined time threshold for the decrease of the torque and the predetermined range for the rate of decrease of the torque can be based on this decrease 2 between the time points t₂ and t₃ in the curve. For example, the time threshold for the decrease 2 of the torque T should preferably be set long enough to distinguish the decrease from random fluctuation in the torque but shorter than the time between the time points t₂ and t₃. In a similar manner, the predetermined range for the rate of decrease of the torque T should preferably be set such that it approximately corresponds to the rate of decrease of the torque T caused by the shortening of the spoolable medium 10. Again, possible error margins can be taken into account. After time point t₃ the torque T produced by the electric motor 30 starts to increase again because the anchor 11 is being raised from the water into the air and the upward buoyant force exerted by the water upon the anchor 11 is gradually lost. At time t₄ the increasing of the torque T produced by the electric motor 30 stops, corresponding to the moment when the anchor 11 is completely lifted above the surface 200 of the body of water. This increase 3 between the time points t₃ and t₄ is the second increase in the torque produced by the electric motor 30 to be detected. Thus, the value of the second predetermined torque threshold can be based on the increase in the torque T caused by the anchor 11 being lifted from the body of water, i.e. the difference of the torque t between time points t₃ and t₄. Again, when determining the value of the second predetermined torque threshold, a possible error margin can be taken into account. Then, in response to detecting the second increase 3, it can be determined that the anchor 11 has risen above the water surface 200 of said body of water.

The first predetermined torque threshold, the second predetermined torque threshold, the predetermined time threshold, and the predetermined range for the decrease of the torque produced by the electric motor 30 may be determined by calculations or simulations based on the system characteristics of a system in which the embodiments described herein are to be used. Alternatively, it is possible to determine the required values by running one or more test cycles with the anchor winch system in real anchor heaving situations, e.g. manually, and simultaneously observing the resulting changes in the torque T produced by the electric motor 30 at the different points during the raising of the anchor 11 from the bottom 300 of the body of water to above the water surface 200 of said body of water. Thus, the electric drive may have suitable functionality to determine or learn the suitable values for e.g. the first predetermined torque threshold, the second predetermined torque threshold, the predetermined time threshold, and the predetermined range for the decrease of the torque on the basis of such test run or test runs. Such teaching of the anchor winch system could be initially performed in connection with a commissioning of the anchor winch system, for example, and repeated later, if necessary, e.g. due to changes in the system characteristics.

An apparatus implementing the various measuring and control functions according to any one of the above embodiments, or a combination thereof, may be implemented as one unit or as two or more separate units that are configured to implement the functionality of the various embodiments. Here the term 'unit' refers generally to a physical or logical entity, such as a physical device or a part thereof or a software routine. One or more of these units, such as the control unit 41, may reside in an electric drive or a component thereof such as the inverter 40, for example.

An apparatus, such as the control unit 41, according to any one of the embodiments may be implemented at least partly by means of one or more computers or corresponding digital signal processing (DSP) equipment provided with suitable software, for example. Such a computer or digital signal processing equipment preferably comprises at least a working memory (RAM) providing storage area for arithmetical operations and a central processing unit (CPU), such as a general-purpose digital signal processor. The CPU may comprise a set of registers, an arithmetic logic unit, and a CPU control unit. The CPU control unit is controlled by a sequence of program instructions transferred to the CPU from the RAM. The CPU control unit may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The computer may also have an operating system, which may provide system services to a computer program written with the program instructions. The computer or other apparatus implementing the invention, or a part thereof, may further comprise suitable input means for receiving e.g. measurement and/or control data, and output means for outputting e.g. control data. It is also possible to use a specific integrated circuit or circuits, or discrete electric components and devices for implementing the functionality according to any one of the embodiments.

The invention according to any one of the embodiments, or any combination thereof, can be implemented in existing system elements, such as electric drives or components thereof, such as inverters or frequency converters, or similar devices, or by using separate dedicated elements or devices in a centralized or distributed manner. Present devices for electric drives, such as inverters and frequency converters, typically comprise processors and memory that can be utilized in the functions according to embodiments of the invention. Thus, all modifications and configurations required for implementing an embodiment of the invention e.g. in existing devices may be performed as software routines, which may be implemented as added or updated software routines. If the functionality of the invention is implemented by software, such software can be provided as a computer program product comprising computer program code which, when run on a computer, causes the computer or corresponding arrangement to perform the functionality according to the invention as described above. Such a computer program code may be stored or generally embodied on a computer readable medium, such as suitable memory, e.g. a flash memory or a disc memory, from which it is loadable to the unit or units executing the program code. In addition, such a computer program code implementing the invention may be loaded to the unit or units executing the computer program code via a suitable data network, for example, and it may replace or update a possibly existing program code.

It is obvious to a person skilled in the art that as technology advances, the basic idea of the invention can be implemented in a variety of ways. Consequently, the invention and its embodiments are not restricted to the above examples, but can vary within the scope of the claims.

## Claims

1. A method for operating an anchor winch of a vessel (100), the anchor winch comprising a winch drum (20) for spooling a spoolable medium (10), which has an anchor (11) connected to an end thereof, to raise or lower the anchor, and an electric motor (30) configured to rotate the winch drum about an axis of rotation (21) thereof during spooling in or spooling out of the spoolable medium, the method comprising:
raising the anchor (11) from a bottom (300) of a body of water to above a water surface (200) of said body of water by driving the winch drum (20) to spool in the spoolable medium (10) by the electric motor (30); and:
monitoring, during the raising of the anchor (11) from the bottom (300) of the body of water to above the water surface (200) of said body of water, a torque produced by the electric motor (30), or a quantity indicative thereof, **characterized in that** the method comprises:
detecting, during the raising of the anchor (11) from the bottom (300) of the body of water to above the water surface (200) of said body of water, a first increase in the torque produced by the electric motor (30), which first increase has a value higher than a first predetermined torque threshold;
detecting, during the raising of the anchor (11) from the bottom (300) of the body of water to above the water surface (200) of said body of water and after detecting the first increase, a decrease in the torque produced by the electric motor (30), which decrease lasts for at least a predetermined time threshold and during which decrease a rate of decrease of the torque produced by the electric motor is within a predetermined range;
detecting, during the raising of the anchor (11) from the bottom (300) of the body of water to above the water surface (200) of said body of water and after detecting the decrease, a second increase in the torque produced by the electric motor (30), which second increase has a value higher than a second predetermined torque threshold; and
in response to detecting the second increase, determining that the anchor (11) has risen above the water surface (200) of said body of water.

2. A method as claimed in claim 1, comprising:
in response to the determining that the anchor (11) has risen above the water surface (200) of said body of water, stopping the raising of the anchor or lowering a speed at which the anchor is being raised and continuing the raising of the anchor at the lowered speed.

3. A method as claimed in claim 2, wherein the stopping of the raising of the anchor (11) or the lowering of the speed at which the anchor is being raised is performed essentially immediately after determining that the anchor has risen above the water surface (200) of said body of water.

4. A method as claimed in claim 2, wherein the stopping of the raising of the anchor (11) or the lowering of the speed at which the anchor is being raised is performed after a predetermined delay after determining that the anchor has risen above the water surface (200) of said body of water.

5. A method as claimed in any one of claims 1 to 4, wherein the quantity indicative of the torque produced by the electric motor (30) is a current or an electric power supplied to the electric motor.

6. A method as claimed in any one of claims 1 to 5, wherein the electric drive comprises an inverter (40) or a frequency converter for driving the electric motor (30).

7. A method as claimed in any one of claims 1 to 6, wherein the spoolable medium (10) comprises at least one of a cable, a rope, a wire, and a chain.

8. A computer program product comprising computer program code, wherein execution of the program code in a computer causes the computer to carry out the steps of the method according to any one of claims 1 to 7.

9. An anchor winch for a vessel (100), comprising:
a winch drum (20) for spooling a spoolable medium (10), which has an anchor (11) connected to an end thereof, to raise or lower the anchor; and
an electric drive comprising an electric motor (30) configured to rotate the winch drum (20) about an axis of rotation (21) thereof during spooling in or spooling out of the spoolable medium (10),
wherein the electric drive is configured to raise the anchor (11) from a bottom (300) of a body of water to above a water surface (200) of said body of water by driving the winch drum (20) to spool in the spoolable medium (10) by the electric motor (30), and wherein the electric drive comprises: monitoring means (41) configured to monitor a torque produced by the electric motor (30), or a quantity indicative thereof, **characterized in that** the monitoring means are configured to:
detect, during the raising of the anchor (11) from the bottom (300) of the body of water to above the water surface (200) of the body of water, a first increase in the torque produced by the electric motor (30), which first increase has a value higher than a first predetermined torque threshold;
detect, during the raising of the anchor (11) from the bottom (300) of the body of water to above the water surface (200) of the body of water and after detecting the first increase, a decrease in the torque produced by the electric motor (30), which decrease lasts for at least a predetermined time threshold and during which decrease a rate of decrease of the torque produced by the electric motor is within a predetermined range;
detect, during the raising of the anchor (11) from the bottom (300) of the body of water to above the water surface (200) of the body of water and after detecting the decrease, a second increase in the torque produced by the electric motor (30), which second increase has a value higher than a second predetermined torque threshold; and
in response to detecting the second increase, determine that the anchor (30) has risen above the water surface (200) of said body of water.

10. An anchor winch as claimed in claim 9, wherein the electric drive is configured, in response to the determining that the anchor (11) has risen above the water surface (200) of said body of water, to stop the raising of the anchor or to lower a speed at which the anchor is being raised and to continue to raise the anchor at the lowered speed.

11. An anchor winch as claimed in claim 10, wherein the electric drive is configured to perform the stopping of the raising of the anchor (11) or the lowering of the speed at which the anchor is being raised essentially immediately after determining that the anchor has risen above the water surface (200) of said body of water.

12. An anchor winch as claimed in claim 10, wherein the electric drive is configured to perform the stopping of the raising of the anchor (11) or the lowering of the speed at which the anchor is being raised after a predetermined delay after determining that the anchor has risen above the water surface (200) of said body of water.

13. An anchor winch as claimed in any one of claims 9 to 12, wherein the quantity indicative of the torque produced by the electric motor (30) is a current or an electric power supplied to the electric motor.

14. An anchor winch as claimed in any one of claims 9 to 13, wherein the electric drive comprises an inverter (40) or a frequency converter for driving the electric motor (30).

15. An anchor winch as claimed in any one of claims 9 to 14, wherein the spoolable medium (10) comprises at least one of a cable, a rope, a wire, and a chain.

## Patentansprüche

1. Verfahren zum Betreiben einer Ankerwinde eines Wasserfahrzeugs (100), wobei die Ankerwinde eine Windentrommel (20), mit der ein wickelbares Medium (10), mit dessen einem Ende ein Anker (11) verbunden ist, gewickelt wird, um den Anker anzuheben oder abzusenken, sowie einen Elektromotor (30) umfasst, der so eingerichtet ist, dass er die Windentrommel beim Aufwikkein oder Abwickeln des wickelbaren Mediums um eine Drehachse (21) derselben herum dreht, wobei das Verfahren umfasst:
Anheben des Ankers (11) von einem Boden (300) eines Gewässers bis über die Wasseroberfläche (200) des Gewässers durch Antreiben der Windentrommel (20) zum Aufwickeln des wickelbaren Mediums (10) mit dem Elektromotor (30); sowie
Überwachen eines durch den Elektromotor (30) erzeugten Drehmoments oder einer dieses anzeigenden Größe während des Anhebens des Ankers (11) von dem Boden (300) des Gewässers bis über die Wasseroberfläche (200) des Gewässers, **dadurch gekennzeichnet, dass** das Verfahren umfasst:
Erfassen einer ersten Zunahme des durch den Elektromotor (30) erzeugten Drehmoments während des Anhebens des Ankers (11) von dem Boden (300) des Gewässers bis über die Wasseroberfläche (200) des Gewässers, wobei diese erste Zunahme einen Wert hat, der über einem ersten vorgegebenen Drehmoment-Schwellenwert liegt;
Erfassen einer Abnahme des durch den Elektromotor (30) erzeugten Drehmoments während des Anhebens des Ankers (11) von dem Boden (300) des Gewässers bis über die Wasseroberfläche (200) des Gewässers und nach Erfassen der ersten Zunahme, wobei diese Abnahme über wenigstens einen vorgegebenen Zeit-Schwellenwert anhält und während dieser Abnahme eine Geschwindigkeit von Abnahme des durch den Elektromotor erzeugten Drehmoments innerhalb eines vorgegebenen Bereiches liegt;
Erfassen einer zweiten Zunahme des durch den Elektromotor (30) erzeugten Drehmoments während des Anhebens des Ankers (11) von dem Boden (300) des Gewässers bis über die Wasseroberfläche (200) des Gewässers und nach Erfassen der Abnahme, wobei diese zweite Zunahme einen Wert hat, der über einem zweiten vorgegebenen Drehmoment-Schwellenwert liegt; sowie
Feststellen, dass sich der Anker (11) über die Wasseroberfläche (200) des Gewässers bewegt hat, in Reaktion auf Erfassen der zweiten Zunahme.

2. Verfahren nach Anspruch 1, das umfasst:
Beenden des Anhebens des Ankers oder Verringern einer Geschwindigkeit, mit der der Anker angehoben wird, und Fortsetzen des Anhebens des Ankers mit der verringerten Geschwindigkeit in Reaktion darauf, dass festgestellt wird, dass sich der Anker (11) über die Wasseroberfläche (200) des Gewässers bewegt hat.

3. Verfahren nach Anspruch 2, wobei das Beenden des Anhebens des Ankers (11) oder das Verringern der Geschwindigkeit, mit der der Anker angehoben wird, im Wesentlichen unmittelbar durchgeführt wird, nachdem festgestellt worden ist, dass sich der Anker über die Wasseroberfläche (200) des Gewässers bewegt hat.

4. Verfahren nach Anspruch 2, wobei das Beenden des Anhebens des Ankers (11) oder das Verringern der Geschwindigkeit, mit der der Anker angehoben wird, nach einer vorgegebenen Verzögerung durchgeführt wird, nachdem festgestellt worden ist, dass sich der Anker über die Wasseroberfläche (200) des Gewässers bewegt hat.

5. Verfahren nach einem der Ansprüche 1 bis 4, wobei die Größe, die das durch den Elektromotor (30) erzeugte Drehmoment anzeigt, ein Strom oder eine elektrische Leistung ist, der/die dem Elektromotor zugeführt wird.

6. Verfahren nach einem der Ansprüche 1 bis 5, wobei der elektrische Antrieb einen Wechselrichter (40) oder einen Frequenzwandler zum Ansteuern des Elektromotors (30) umfasst.

7. Verfahren nach einem der Ansprüche 1 bis 6, wobei das wickelbare Medium (10) ein Seil, ein Tau, ein Kabel oder/und eine Kette umfasst.

8. Computerprogramm-Erzeugnis, das Computerprogramm-Code umfasst, wobei Ausführung des Programm-Codes in einem Computer den Computer veranlasst, die Schritte des Verfahrens nach einem der Ansprüche 1 bis 7 auszuführen.

9. Ankerwinde für ein Wasserfahrzeug (100), die umfasst:
eine Windentrommel (20), mit der ein wickelbares Medium (10), mit dessen einem Ende ein Anker (11) verbunden ist, gewickelt wird, um den Anker anzuheben oder abzusenken,
einen elektrischen Antrieb, der einen Elektromotor (30) umfasst, der so eingerichtet ist, dass er die Windentrommel (20) beim Aufwickeln oder Abwickeln des wickelbaren Mediums (10) um eine Drehachse (21) derselben herum dreht,
wobei der elektrische Antrieb so eingerichtet ist, dass er den Anker (11) von einem Boden (300) eines Gewässers bis über eine Wasseroberfläche (200) des Gewässers anhebt, indem er die Windentrommel (20) zum Aufwickeln des wickelbaren Mediums (10) mit dem Elektromotor (30) antreibt, und der elektrische Antrieb umfasst:
eine Überwachungseinrichtung (41), die so eingerichtet ist, dass sie ein durch den Elektromotor (30) erzeugtes Drehmoment oder eine dieses anzeigende Größe überwacht, **dadurch gekennzeichnet, dass** die Überwachungseinrichtung so eingerichtet ist, dass sie:
während des Anhebens des Ankers (11) von dem Boden (300) des Gewässers bis über die Wasseroberfläche (200) des Gewässers eine erste Zunahme des durch den Elektromotor (30) erzeugten Drehmoments erfasst, wobei die erste Zunahme einen Wert hat, der über einem ersten vorgegebenen Drehmoment-Schwellenwert liegt;
während des Anhebens des Ankers (11) von dem Boden (300) des Gewässers bis über die Wasseroberfläche (200) des Gewässers und nach Erfassen der ersten Zunahme eine Abnahme des durch den Elektromotor (30) erzeugten Drehmoments erfasst, wobei diese Abnahme über wenigstens einen vorgegebenen Zeit-Schwellenwert anhält und während dieser Abnahme eine Geschwindigkeit der Abnahme des durch den Elektromotor erzeugten Drehmoments innerhalb eines vorgegebenen Bereiches liegt;
während des Anhebens des Ankers (11) von dem Boden (300) des Gewässers bis über die Wasseroberfläche (200) des Gewässers und nach Erfassen der Abnahme eine zweite Zunahme des durch den Elektromotor (30) erzeugten Drehmoments erfasst, wobei diese zweite Zunahme einen Wert hat, der über einem zweiten vorgegebenen Drehmoment-Schwellenwert liegt; und
in Reaktion auf Erfassen der zweiten Zunahme feststellt, dass sich der Anker (30) über die Wasseroberfläche (200) des Gewässers bewegt hat.

10. Ankerwinde nach Anspruch 9, wobei der elektrische Antrieb so eingerichtet ist, dass er in Reaktion darauf, dass festgestellt wird, dass sich der Anker (11) über die Wasseroberfläche (200) des Gewässers bewegt hat, das Anheben des Ankers beendet oder eine Geschwindigkeit verringert, mit der der Anker angehoben wird, und das Anheben des Ankers mit der verringerten Geschwindigkeit fortsetzt.

11. Ankerwinde nach Anspruch 10, wobei der elektrische Antrieb so eingerichtet ist, dass er das Beenden des Anhebens des Ankers (11) oder das Verringern der Geschwindigkeit, mit der der Anker angehoben wird, im Wesentlichen unmittelbar nachdem festgestellt worden ist, dass sich der Anker über die Wasseroberfläche (200) des Gewässers bewegt hat, durchführt.

12. Ankerwinde nach Anspruch 10, wobei der elektrische Antrieb so eingerichtet ist, dass er das Beenden des Anhebens des Ankers (11) oder das Verringern der Geschwindigkeit, mit der der Anker angehoben wird, nach einer vorgegebenen Verzögerung durchführt, nachdem festgestellt worden ist, dass sich der Anker über die Wasseroberfläche (200) des Gewässers bewegt hat.

13. Ankerwinde nach einem der Ansprüche 9 bis 12, wobei die Größe, die das durch den Elektromotor (30) erzeugte Drehmoment anzeigt, ein Strom oder eine elektrische Leistung ist, der/die dem Elektromotor zugeführt wird.

14. Ankerwinde nach einem der Ansprüche 9 bis 13, wobei der elektrische Antrieb einen Wechselrichter (40) oder einen Frequenzwandler zum Ansteuern des Elektromotors (30) umfasst.

15. Ankerwinde nach einem der Ansprüche 9 bis 14, wobei das wickelbare Medium (10) ein Seil, ein Tau, ein Kabel oder/und eine Kette umfasst.

## Revendications

1. Procédé d'utilisation d'un guindeau d'un vaisseau (100), le guindeau comprenant un tambour de treuil (20) pour enrouler un support enroulable (10), lequel comporte une ancre (11) reliée à l'une de ses extrémités pour lever ou jeter l'ancre, et un moteur électrique (30) configuré pour faire tourner le tambour de treuil autour d'un axe de rotation (21) lors de l'enroulement ou du déroulement du support enroulable, le procédé comprenant les opérations suivantes:
lever l'ancre (11) du fond (300) d'une masse d'eau au-dessus d'une surface d'eau (200) de ladite masse d'eau en entraînant le tambour du treuil (20) pour enrouler le support enroulable (10) par le moteur électrique (30); et
surveiller, pendant le levage de l'ancre (11) du fond (300) de la masse d'eau au-dessus de la surface de l'eau (200) de ladite masse d'eau, un couple produit par le moteur électrique (30), ou une quantité indicative de celui-ci, **caractérisé en ce que** le procédé consiste à:
détecter, lors du levage de l'ancre (11) du fond (300) de la masse d'eau au-dessus de la surface de l'eau (200) de ladite masse d'eau, une première augmentation du couple produit par le moteur électrique (30), laquelle première augmentation est d'une valeur supérieure à un premier seuil de couple prédéterminé;
détecter, lors du levage de l'ancre (11) du fond (300) de la masse d'eau au-dessus de la surface de l'eau (200) de ladite masse d'eau et après avoir détecté la première augmentation, une diminution du couple produit par la moteur électrique (30), laquelle diminution dure au moins un seuil de temps prédéterminé et pendant lequel la vitesse de diminution du couple produit par le moteur électrique est comprise dans une plage prédéterminée;
détecter, lors du levage de l'ancre (11) du fond (300) de la masse d'eau au-dessus de la surface de l'eau (200) de ladite masse d'eau et après avoir détecté la diminution, une seconde augmentation du couple produit par le moteur électrique (30), laquelle seconde augmentation est d'une valeur supérieure à un second seuil de couple prédéterminé; et
en réponse à la détection de la seconde augmentation, déterminer que l'ancre (11) s'est élevée au-dessus de la surface de l'eau (200) de ladite masse d'eau.

2. Procédé selon la revendication 1, comprenant les opérations suivantes:
en réponse à la détermination que l'ancre (11) s'est élevée au-dessus de la surface de l'eau (200) de ladite masse d'eau, arrêter le levage de l'ancre ou réduire une vitesse à laquelle l'ancre est levée et poursuivre le levage de l'ancre à la vitesse réduite.

3. Procédé selon la revendication 2, dans lequel l'arrêt du levage de l'ancre (11) ou l'abaissement de la vitesse à laquelle l'ancre est levée s'effectue presque immédiatement après avoir déterminé que l'ancre s'est levée au-dessus de la surface de l'eau (200) de ladite masse d'eau.

4. Procédé selon la revendication 2, dans lequel l'arrêt du levage de l'ancre (11) ou l'abaissement de la vitesse à laquelle l'ancre est levée s'effectue avec un retard prédéterminé, après avoir déterminé que l'ancre s'est levée au-dessus de la surface de l'eau (200) de ladite masse d'eau.

5. Procédé selon l'une quelconque des revendications 1 à 4, dans lequel la quantité indicative du couple produit par le moteur électrique (30) est un courant ou une puissance électrique injectés dans le moteur électrique.

6. Procédé selon l'une quelconque des revendications 1 à 5, dans lequel l'entraînement électrique comprend un onduleur (40) ou un convertisseur de fréquence destiné à entraîner le moteur électrique (30).

7. Procédé selon l'une quelconque des revendications 1 à 6, dans lequel le support enroulable (10) comprend au moins un câble, un cordage, un fil métallique et une chaîne.

8. Produit de programme informatique comprenant un code de programme informatique, dans lequel l'exécution du code de programme dans un ordinateur conduit l'ordinateur à réaliser les étapes du procédé selon l'une quelconque des revendications 1 à 7.

9. Guindeau pour vaisseau (100), comprenant:
un tambour de treuil (20) pour enrouler un support enroulable (10), à l'extrémité duquel est connectée une ancre (11), pour lever ou abaisser l'ancre; et
un entraînement électrique comprenant un moteur électrique (30) configuré pour faire tourner le tambour de treuil (20) autour d'un axe de rotation (21) de celui-ci lors de l'enroulement ou du déroulement du support enroulable (10),
dans lequel l'entraînement électrique est configuré pour lever l'ancre (11) du fond (300) d'une masse d'eau au-dessus d'une surface d'eau (200) de ladite masse d'eau en entraînant le tambour de treuil (20) pour qu'il s'enroule dans le tiroir moyen (10) par le moteur électrique (30), et dans lequel l'entraînement électrique comprend:
des moyens de surveillance (41) configurés pour surveiller un couple produit par le moteur électrique (30) ou une quantité indicative de celui-ci,
**caractérisé en ce que** les moyens de surveillance sont configurés pour:
détecter, lors du levage de l'ancre (11) du fond (300) de la masse d'eau au-dessus de la surface de l'eau (200) de ladite masse d'eau, une première augmentation du couple produit par le moteur électrique (30), laquelle première augmentation est d'une valeur supérieure à un premier seuil de couple prédéterminé;
détecter, lors du levage de l'ancre (11) du fond (300) de la masse d'eau au-dessus de la surface de l'eau (200) de ladite masse d'eau et après avoir détecté la première augmentation, une diminution du couple produit par la moteur électrique (30), laquelle diminution dure au moins un seuil de temps prédéterminé et pendant lequel la vitesse de diminution du couple produit par le moteur électrique est comprise dans une plage prédéterminée;
détecter, lors du levage de l'ancre (11) du fond (300) de la masse d'eau au-dessus de la surface de l'eau (200) de ladite masse d'eau et après avoir détecté la diminution, une seconde augmentation du couple produit par le moteur électrique (30), laquelle seconde augmentation est d'une valeur supérieure à un second seuil de couple prédéterminé; et
en réponse à la détection de la seconde augmentation, déterminer que l'ancre (30) s'est élevée au-dessus de la surface de l'eau (200) de ladite masse d'eau.

10. Guindeau selon la revendication 9, dans lequel l'entraînement électrique est configuré, en réponse à la détermination que l'ancre (11) s'est élevée au-dessus de la surface de l'eau (200) de ladite masse d'eau, pour arrêter le levage de l'ancre ou réduire une vitesse à laquelle l'ancre est levée et poursuivre le levage de l'ancre à la vitesse réduite.

11. Guindeau selon la revendication 10, dans lequel l'entraînement électrique est configuré pour arrêter le levage de l'ancre (11) ou l'abaissement de la vitesse à laquelle l'ancre est levée s'effectue presque immédiatement après avoir déterminé que l'ancre s'est levée au-dessus de la surface de l'eau (200) de ladite masse d'eau.

12. Guindeau selon la revendication 10, dans lequel l'entraînement électrique est configuré pour arrêter le levage de l'ancre (11) ou l'abaissement de la vitesse à laquelle l'ancre est levée s'effectue, après un retard prédéterminé, après avoir déterminé que l'ancre s'est levée au-dessus de la surface de l'eau (200) de ladite masse d'eau.

13. Guindeau selon l'une quelconque des revendications 9 à 12, dans lequel la quantité indicative du couple produit par le moteur électrique (30) est un courant ou une puissance électrique injectés dans le moteur électrique.

14. Guindeau selon l'une quelconque des revendications 9 à 13, dans lequel l'entraînement électrique comprend un onduleur (40) ou un convertisseur de fréquence destiné à entraîner le moteur électrique (30).

15. Guindeau selon l'une quelconque des revendications 9 à 14, dans lequel le support enroulable (10) comprend au moins un câble, un cordage, un fil métallique et une chaîne.
